(19) Europäisches Patentamt
European Patent Office
Office européen des brevets

(11) **EP 2 832 810 A1**

(12) **EUROPEAN PATENT APPLICATION**

(43) Date of publication:
**04.02.2015 Bulletin 2015/06**

(51) Int Cl.:
*C09J 7/02* (2006.01)  *H01M 2/08* (2006.01)

(21) Application number: **14179283.8**

(22) Date of filing: **31.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.08.2013 JP 2013161479**

(71) Applicant: **NITTO DENKO CORPORATION**
**Ibaraki-shi,**
**Osaka 567-8680 (JP)**

(72) Inventors:
• **Takamura, Yuichi**
**Ibaraki-shi, Osaka 567-8680 (JP)**
• **Kawabe, Shigeki**
**Ibaraki-shi, Osaka 567-8680 (JP)**
• **Terashima, Tadashi**
**Ibaraki-shi, Osaka 567-8680 (JP)**

(74) Representative: **Grünecker, Kinkeldey,**
**Stockmair & Schwanhäusser**
**Leopoldstrasse 4**
**80802 München (DE)**

(54) **Pressure-sensitive adhesive tape or sheet**

(57)    Disclosed is a pressure-sensitive adhesive tape or sheet which does not cause deterioration of an electrolytic solution even when immersed in the electrolytic solution and which can be smoothly unwound even after being wound. The pressure-sensitive adhesive tape or sheet includes a substrate and, on one surface thereof, a pressure-sensitive adhesive layer. The substrate has a wetting tension of from 30 to 35 mN/m in the surface to face the pressure-sensitive adhesive layer, where the wetting tension is measured by a method according to JIS K 6768:1999. The pressure-sensitive adhesive layer includes a pressure-sensitive adhesive containing substantially no polar group. A pressure-sensitive adhesive in the pressure-sensitive adhesive layer is preferably a rubber pressure-sensitive adhesive such as a polyisobutylene rubber and/or an isobutylene-isoprene rubber.

[Fig. 1]

EP 2 832 810 A1

**Description**

Technical Field

The present invention relates to a pressure-sensitive adhesive tape or sheet that is used in manufacturing of a non-aqueous battery. More specifically, the present invention relates to a pressure-sensitive adhesive tape or sheet that is applied to a portion to be immersed in an electrolytic solution of a non-aqueous battery, or a portion having a possibility of coming into contact with the electrolytic solution.

Background Art

Lithium-ion batteries and other non-aqueous batteries (non-aqueous electrolyte batteries) are each prepared by stacking sheet-like electrodes by the medium of a separator to give a laminate, spirally winding the laminate to give a spiral bundle of electrodes, and encapsulating the spiral bundle of electrodes together with an electrolytic solution into a battery case. Insulating pressure-sensitive adhesive tapes are applied to battery elements forming such a non-aqueous battery for the purpose of preventing a foreign substance or burr from penetrating the separator and for the purpose of improving the packability of the electrodes into the battery case (e.g., for fixing the spiral bundle of electrodes to prevent loosing and/or for preventing an active material from separating.)

An insulating pressure-sensitive adhesive tape for use in the application structurally has a substrate and a pressure-sensitive adhesive layer present on or over the substrate and is generally manufactured, stored, and supplied while being wound as a roll (Japanese Unexamined Patent Application Publication (JP-A) No. 2005-298094 (PTL 1)).

The wound insulating tape is desirably smoothly unwound upon application operation of the tape. A pressure-sensitive adhesive contained in the pressure-sensitive adhesive layer of the insulating tape desirably does not cause deterioration of an electrolytic solution, because the tape is used inside a non-aqueous battery. For this purpose, there is known an insulating tape using a pressure-sensitive adhesive containing substantially no polar group that causes deterioration (JP-A No. H11-102722 (PTL 2)).

Citation List

Patent Literature

> PTL 1: JP-A No. 2005-298094
> PTL 2: JP-A No. H11-102722

Summary of Invention

Technical Problem

The insulating tape using a pressure-sensitive adhesive containing substantially no polar group, however, has poor adhesion between the pressure-sensitive adhesive layer and the substrate and disadvantageously fails to be smoothly unwound, because the pressure-sensitive adhesive may transfer to the substrate backside upon unwinding. Accordingly, an object of the present invention is to provide a pressure-sensitive adhesive tape or sheet, where the tape or sheet does not cause deterioration of an electrolytic solution even when immersed in the electrolytic solution and can be smoothly unwound even after being wound as a roll.

Solution to Problem

Wettability, i.e., wetting tension of a substrate is one of objective indices for evaluating adhesion between the substrate and a pressure-sensitive adhesive in the design of a pressure-sensitive adhesive tape. A general view is that the pressure-sensitive adhesive has better wettability with the substrate to increase the adhesiveness between the substrate and the pressure-sensitive adhesive, when the substrate has a high wetting tension. After intensive investigations to achieve the object, however, the present inventors have found that, when a pressure-sensitive adhesive containing substantially no polar group is employed as a pressure-sensitive adhesive, the adhesiveness between the pressure-sensitive adhesive and a substrate can be improved by allowing the substrate to have a wetting tension at an appropriately low level, contrarily to the general view; and that the resulting pressure-sensitive adhesive tape, when wound as a roll, can be smoothly unwound without transfer of the pressure-sensitive adhesive to the substrate backside.

The present invention has been made based on these findings.

Specifically, the present invention provides a pressure-sensitive adhesive tape or sheet including a substrate; and a pressure-sensitive adhesive layer present on or over one surface of the substrate, in which the surface of the substrate to face the pressure-sensitive adhesive layer has a wetting tension of from 30 to 35 mN/m, where the wetting tension is measured by a method according to Japanese Industrial Standard (JIS) K 6768:1999; and the pressure-sensitive adhesive layer includes a pressure-sensitive adhesive containing substantially no polar group.

The pressure-sensitive adhesive layer may include a rubber pressure-sensitive adhesive as the pressure-sensitive adhesive.

The rubber pressure-sensitive adhesive may be at least one of a polyisobutylene rubber and an isobutylene-isoprene rubber.

The pressure-sensitive adhesive tape or sheet may have an anchoring force of 5 N/19 mm or more, where the anchoring force is measured by a measurement method as follows:

anchoring force measurement method: the anchoring force is measured by pressing and bonding a 19 mm-wide polyester pressure-sensitive adhesive tape (trade name "No. 315 #25", supplied by Nitto Denko Corporation) onto a surface of the pressure-sensitive adhesive layer of a sample 20-mm wide pressure-sensitive adhesive tape or sheet by one reciprocating movement of a 2-kg roller at 25°C to give a specimen; leaving the specimen stand at 25°C for 30 minutes or longer; peeling the polyester pressure-sensitive adhesive tape from the specimen at an angle of 180° and a speed of 300 mm/minute; measuring a peel stress during the peeling; and defining the peel stress as the anchoring force.

The pressure-sensitive adhesive tape or sheet may be used in manufacturing of a non-aqueous battery.

The present invention also provides a roll of pressure-sensitive adhesive tape or sheet, which is a roll obtained by winding the pressure-sensitive adhesive tape or sheet.

In addition and advantageously, the present invention provides a non-aqueous battery including a battery element, and the pressure-sensitive adhesive tape or sheet adhering to the battery element.

Advantageous Effects of Invention

The pressure-sensitive adhesive tape or sheet according to an embodiment of the present invention, as having the configuration, offers good adhesion between the pressure-sensitive adhesive layer and the substrate. The pressure-sensitive adhesive tape or sheet, when wound as a roll, can be smoothly unwound without transfer of the pressure-sensitive adhesive to the substrate backside and offers excellent workability. The pressure-sensitive adhesive tape or sheet, even when adhering to a battery element and being immersed in an electrolytic solution, can maintain the adherend (battery element) with a high adhesive strength. The pressure-sensitive adhesive is stable to the electrolytic solution even when the battery is charged and discharged repeatedly'while the pressure-sensitive adhesive layer is in contact with the electrolytic solution. The pressure-sensitive adhesive tape or sheet less causes the electrolytic solution deterioration and helps the battery to maintain its output at a high level, because the pressure-sensitive adhesive less dissolves into the electrolytic solution and, even if dissolving into the electrolytic solution, has low reactivity with the electrolyte.

Brief Description of Drawings

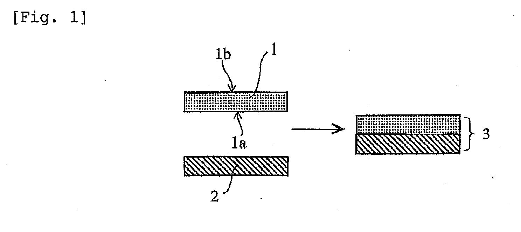

Fig. 1 is a schematic cross-sectional view illustrating a pressure-sensitive adhesive tape or sheet 3 as an embodiment of the present invention, where the pressure-sensitive adhesive tape or sheet includes a substrate 1; and a pressure-sensitive adhesive layer 2 present on or over one surface 1a of the substrate 1; and

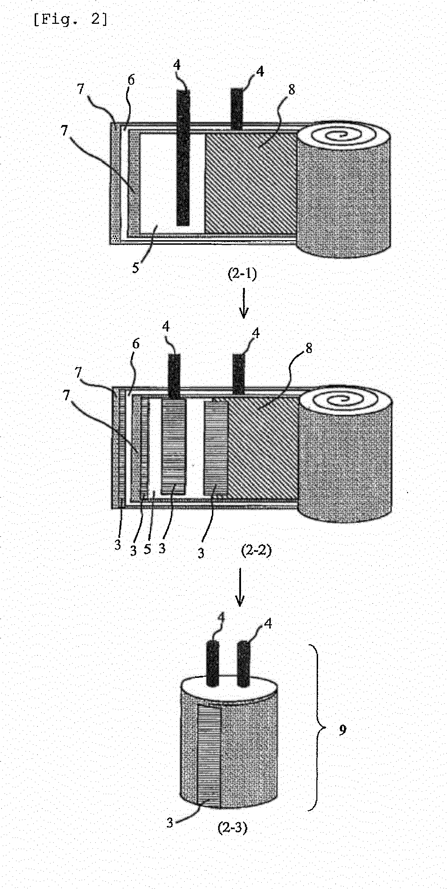

Figs. 2-1, 2-2, and 2-3 are schematic diagrams illustrating an exemplary use of the pressure-sensitive adhesive tape or sheet according to the embodiment of the present invention, in which Fig. 2-1 is a view before use; Fig. 2-2 is a view where the pressure-sensitive adhesive tape or sheet according to the embodiment of the present invention is attached typically to an electrode plate (sheet-like electrode); and Fig. 2-3 is a view where electrode plates are wound and fixed with the pressure-sensitive adhesive tape or sheet according to the embodiment of the present invention.

Description of Embodiments

The pressure-sensitive adhesive tape or sheet according to the embodiment of the present invention is a pressure-sensitive adhesive tape or sheet including a substrate and, on or over one surface thereof, a pressure-sensitive adhesive layer, in which the surface of the substrate to face the pressure-sensitive adhesive layer has a wetting tension of from 30 to 35 mN/m, where the wetting tension is measured by a method according to JIS K 6768:1999; and the pressure-sensitive adhesive layer includes a pressure-sensitive adhesive containing substantially no polar group.

Pressure-Sensitive Adhesive Layer

The pressure-sensitive adhesive layer for use herein includes a pressure-sensitive adhesive containing substantially no polar group. The polar group may be exemplified by groups that impart affinity for the electrolytic solution to the pressure-sensitive adhesive, including groups having at least one of oxygen atom and nitrogen atom, such as carboxy group, hydroxyl group, amino group, imino group, nitrile group, carbonyl group, aldehyde group, imido group, and nitro group.

The pressure-sensitive adhesive contained in the pressure-sensitive adhesive layer for use herein preferably has a low degree of unsaturation. This is because such pressure-sensitive adhesive has low reactivity with the electrolyte and may less cause electrolytic solution deterioration. Specifically, the pressure-sensitive adhesive may have an iodine value of typically 10 or less, preferably 5 or less, particularly preferably 1 or less, and most preferably 0.5 or less, where the iodine value indicates the degree of unsaturation of the pressure-sensitive adhesive and may be measured by a method according to JIS K 0070:1992.

The pressure-sensitive adhesive layer for use herein preferably includes a rubber pressure-sensitive adhesive as the pressure-sensitive adhesive. The rubber pressure-sensitive adhesive is exemplified by natural rubber pressure-sensitive adhesives; and synthetic rubber pressure-sensitive adhesives (including block copolymers and random copolymers), such as isoprene rubbers, polyisobutylene rubbers, isobutylene-isoprene rubbers, ethylene-propylene rubbers, styrene-butadiene rubbers, styrene-isoprene rubbers, styrene-ethylene-propylene-styrene rubbers, styrene-isoprene-styrene block copolymers, styrene-butadiene-styrene block copolymers, styrene-ethylene-butylene-styrene block copolymers, styrene-ethylene-propylene-styrene block copolymers, styrene-ethylene-propylene block copolymers, reclaimed rubbers, and modified substances derived from them. Each of different rubber pressure-sensitive adhesives may be used alone or in combination. Among them, the pressure-sensitive adhesive for use herein preferably contains at least one of a polyisobutylene rubber and an isobutylene-isoprene rubber. This is because the resulting pressure-sensitive adhesive less dissolves into the electrolytic solution and, even when dissolving thereinto, has low reactivity with the electrolyte, and less causes the electrolytic solution deterioration. Of the polyisobutylene rubber and isobutylene-isoprene rubber, the polyisobutylene rubber is more preferred, because of having a small amount of double bond in the molecule (i.e., having a low degree of unsaturation) and containing no polar group.

The pressure-sensitive adhesive to be contained in the pressure-sensitive adhesive layer may further contain a known customary pressure-sensitive adhesive (e.g., an acrylic pressure-sensitive adhesive) in addition to a rubber pressure-sensitive adhesive. Even in this case, the pressure-sensitive adhesive may contain the rubber pressure-sensitive adhesive (preferably at least one of a polyisobutylene rubber and an isobutylene-isoprene rubber) in a content of preferably 90 percent by weight or more, particularly preferably 95 percent by weight or more, and most preferably 98 percent by weight or more based on the total amount of the entire pressure-sensitive adhesive(s). This is preferred for allowing the pressure-sensitive adhesive to resist dissolution into the electrolytic solution and to less cause the electrolytic solution deterioration. The pressure-sensitive adhesive to be contained in the pressure-sensitive adhesive layer for use herein may further contain a pressure-sensitive adhesive containing a polar group, but the content thereof is preferably 2 percent by weight or less, particularly preferably 1.5 percent by weight or less, based on the total amount of the entire pressure-sensitive adhesive(s).

The pressure-sensitive adhesive(s) to be contained in the pressure-sensitive adhesive layer preferably has a molecular weight distribution as follows:

a pressure-sensitive adhesive fraction in a molecular weight range of from $30 \times 10^4$ to $500 \times 10^4$ (preferably from $30 \times 10^4$ to $480 \times 10^4$, and particularly preferably from $30 \times 10^4$ to $450 \times 10^4$): from greater than 50 percent by weight to 95 percent by weight, preferably from 52 to 95 percent by weight, and particularly preferably from 55 to 95 percent by weight; and

a pressure-sensitive adhesive fraction in a molecular weight range of from $1 \times 10^4$ to less than $30 \times 10^4$ (preferably from $1 \times 10^4$ to $28 \times 10^4$, and particularly preferably from $1 \times 10^4$ to $25 \times 10^4$): from 5 percent by weight to less than 50 percent by weight, preferably from 5 to 48 percent by weight, and particularly preferably from 5 to 45 percent by weight.

In an embodiment, the pressure-sensitive adhesive tape or sheet employs a pressure-sensitive adhesive or adhesives having a molecular weight distribution within the range. The pressure-sensitive adhesive tape or sheet according to the embodiment can be laminated (bonded) with a sufficient adhesive strength even to a portion to be immersed in an electrolytic solution of a non-aqueous battery. Assume that the pressure-sensitive adhesive tape or sheet is used in an environment where the tape or sheet receives high pressure, such as inside the battery. Even in this case, the tape or sheet can resist deformation of the pressure-sensitive adhesive layer and oozing of the adhesive from the substrate, thereby less suffers from dissolution of the adhesive into the electrolytic solution, and less causes the electrolytic solution deterioration. In addition, the pressure-sensitive adhesive tape or sheet can exhibit excellent adhesion to the substrate and, when wound into a roll, can be smoothly unwound without transfer of the pressure-sensitive adhesive to the substrate backside.

The pressure-sensitive adhesive having the molecular weight distribution may employ a single pressure-sensitive adhesive alone, or two or more pressure-sensitive adhesives having different weight-average molecular weights in combination. Assume that the pressure-sensitive adhesive employs two or more pressure-sensitive adhesives having different weight-average molecular weights in combination. In this case, the pressure-sensitive adhesive preferably employs a high-molecular-weight pressure-sensitive adhesive and a low-molecular-weight pressure-sensitive adhesive in a weight ratio of the former to the later of preferably from 95:5 to 65:35, more preferably from 90:10 to 68:32, and particularly preferably from 85:15 to 70:30, where the high-molecular-weight pressure-sensitive adhesive has a weight-average molecular weight of typically from $30x\ 10^4$ to $150x\ 10^4$, preferably from $40x\ 10^4$ to $110x\ 10^4$, and particularly preferably from $45x\ 10^4$ to $100x\ 10^4$; and the low-molecular-weight pressure-sensitive adhesive has a weight-average molecular weight of typically from $1x\ 10^4$ to less than $30x\ 10^4$, preferably from $1x\ 10^4$ to $20x\ 10^4$, and particularly preferably from $1x\ 10^4$ to $10x\ 10^4$.

The pressure-sensitive adhesive layer for use herein may further contain one or more other components in addition to pressure-sensitive adhesive(s). Such other components are exemplified by crosslinking agents, tackifiers (e.g., rosin derivative resins, polyterpene resins, petroleum resins, and oil-soluble phenol resins), plasticizers, fillers, and antioxidants. Each of them may be used alone or in combination.

The pressure-sensitive adhesive layer for use herein may be prepared by a known or customary method. Typically, the pressure-sensitive adhesive layer may be prepared by a method of diluting the pressure-sensitive adhesive and one or more other optional components (hereinafter briefly referred to as "pressure-sensitive adhesive and other optional components") with a solvent according to necessity to prepare a coating liquid; applying the coating liquid to a substrate or a suitable separator (e.g., a release paper); and drying the applied layer. The solvent herein is exemplified by toluene, xylenes, ethyl acetate, and methyl ethyl ketone.

The pressure-sensitive adhesive layer for use herein may have a gel fraction of typically 80% or more, preferably 90% or more, and particularly preferably 93% or more. As used herein the term "gel fraction" refers to a weight percentage of a component insoluble in the electrolytic solution with respect to the initial weight and is determined by a method as follows:

Gel Fraction Measurement Method

A pressure-sensitive adhesive layer (about 0.2 g) is sampled from the pressure-sensitive adhesive tape or sheet, weighed, and the measured weight is defined as "weight (A0) of the pressure-sensitive adhesive layer before immersion in the electrolytic solution".

Next, the sampled pressure-sensitive adhesive layer is immersed in 50 mL of an electrolytic solution (a 1:1 mixture of ethylene carbonate and diethyl carbonate) at an ambient temperature of 40°C for 3 days to extract components soluble in the electrolytic solution.

Insoluble matter alone is then retrieved, heated at 120°C for one hour to evaporate the electrolytic solution (solvent), weighed again, and the measured weight is defined as "weight (A1) of the pressure-sensitive adhesive layer after immersion in the electrolytic solution

$$\mathtt{Gel\ fraction\ (\%)=(A1/A0)\times 100}$$

where:

A0 is the weight of the pressure-sensitive adhesive layer before immersion in the electrolytic solution; and
A1 is the weight of the pressure-sensitive adhesive layer after immersion in the electrolytic solution.

The pressure-sensitive adhesive layer for use herein may have a storage shear modulus G' of preferably from $1\times 10^4$ Pa to $5x\ 10^6$ Pa, and more preferably from $1\times 10^5$ Pa to $1\times 10^6$ Pa at 23°C. As used herein the term "storage shear modulus G'" refers to a value measured by a method as follows:

Storage Shear Modulus G' Measurement Method

A sample pressure-sensitive adhesive layer having a thickness of from 1.5 mm to 2 mm is prepared and diced (blanked) with a punch having a diameter of 7.9 mm to give a measurement sample.

The measurement sample is subjected to a measurement with a rheometer (viscoelastic spectrometer) (trade name "ARES", supplied by Rheometric Scientific Inc. (now TA Instruments)) at a preset chuck pressure of 100 g-weight, a shear frequency of 1 Hz, and a rate of temperature rise of 5°C/minute.

The rheometer uses stainless steel 8-mm parallel plates (Model 708.0157 supplied by TA Instruments).

The pressure-sensitive adhesive layer for use herein has a thickness of typically from about 2 to about 20 $\mu$m, preferably from 4 to 17 $\mu$m, particularly preferably from 4 to 15 $\mu$m, and most preferably from 5 to 15 $\mu$m. The pressure-sensitive adhesive tape or sheet, when employing a pressure-sensitive adhesive layer having a thickness controlled within the range, may offer a sufficient bond strength, less deform, less suffer from oozing of the adhesive from the substrate, and less cause the electrolytic solution deterioration.

Substrate

The substrate for use herein has a wetting tension of preferably from 30 to 35 mN/m, and more preferably from 30 to 34 mN/m in a surface to face the pressure-sensitive adhesive layer, where the wetting tension is measured by a method according to JIS K 6768:1999. A general view is that a substrate, when having a high wetting tension, can suppress crawling of a pressure-sensitive adhesive and offer better adhesiveness to the pressure-sensitive adhesive. According to the embodiment of the present invention, however, the substrate is adapted to have a wetting tension within the low range in a surface to face the pressure-sensitive adhesive layer. The pressure-sensitive adhesive tape or sheet according to the embodiment of the present invention, as having the property, offers satisfactory adhesion between the substrate and the pressure-sensitive adhesive layer and, when wound into a roll, can be smoothly unwound without transfer of the pressure-sensitive adhesive to the substrate backside.

The substrate is exemplified by, but not limited to, suitable thin articles including fibrous substrates such as fabrics, nonwoven fabrics, felt, and nets; paper-based substrates such as various papers; metallic substrates such as metallic foils and metal sheets; plastic substrates such as films or sheets of various resins; rubber substrates such as rubber sheets; foams such as foamed sheets; and laminates of them. Materials to form the plastic substrates are exemplified by polyesters such as poly(ethylene terephthalate)s, poly(ethylene naphthalate)s, poly(butylene terephthalate)s, and poly(butylene naphthalate)s; polyolefins such as polyethylenes, polypropylenes, and ethylene-propylene copolymers; poly(vinyl alcohol)s; poly(vinylidene chloride)s; poly(vinyl chloride)s; vinyl chloride-vinyl acetate copolymers; poly(vinyl acetate)s; polyamides; polyimides; celluloses; fluorocarbon resins; polyethers; polyetheramides; poly(phenylene sulfide)s; polystyrene resins such as polystyrenes; polycarbonates; and polyethersulfones. The substrate may have a single-layer structure or a multi-layer structure. When the substate has a multi-layer structure (includes two or more layers), substrates (materials) forming the respective layers may be the same as or different from each other. Among them, the substrate for use herein is preferably a plastic substrate, of which a polyolefin substrate such as a polypropylene substrate is more preferred.

The substrate may have a thickness not critical, but preferably from about 8 to about 100 $\mu$m, more preferably from 10 to 50 $\mu$m, and particularly preferably from 15 to 40 $\mu$m. The pressure-sensitive adhesive tape or sheet, when employing a substrate having a thickness controlled within the range, can occupy a not excessively large volume of the battery while having a sufficient strength and can support higher capacity of the battery.

The substrate for use herein preferably has a water absorption of typically 3 percent by weight or less, preferably 2 percent by weight or less, particularly preferably 1.5 percent by weight or less, and most preferably 1 percent by weight or less, where the water absorption is determined after the substrate is left stand at an ambient temperature of 23°C and relative humidity of 50% for 24 hours. In this view, the substrate is preferably a plastic substrate(s) selected typically from a polyimide, a poly(phenylene sulfide), and a polypropylene. The pressure-sensitive adhesive tape or sheet, when employing a substrate having a water absorption within the range, may less cause the decomposition of the solute component inside the battery and help the battery to have better properties and a longer life. As used herein the term "water absorption" refers to a value determined by a method as follows:

Water Absorption Measurement Method

A sample pressure-sensitive adhesive tape or sheet is dried in an oven at 50°C for 24 hours, cooled in a desiccator for 2 hours, and the weight (W1) thereof is measured.

Next, the sample is left stand in a thermo-hygrostat at a temperature of 23°C and relative humidity of 50% for 24 hours, retrieved from the thermo-hygrostat, from which moisture is wiped off, and the weight (W2) of the resulting sample is measured, the percentage of weight increase from the weight (W1) before immersion is calculated according to an expression: (W2-W1/W1) $\times$ 100, and is defined as the water absorption.

The substrate for use herein may have a puncture strength of preferably 300 gf or more, more preferably 450 gf or more, particularly preferably 500 gf or more, and most preferably 600 gf or more, where the puncture strength is determined by a method mentioned later. In this view, the tape or sheet preferably employs, as the substrate, a substrate of a plastic selected typically from a polyimide, a poly(phenylene sulfide), a polyester, and a polypropylene.

Puncture Strength Measurement Method

A sample pressure-sensitive adhesive tape or sheet is fixed on a stage having a round hole with a diameter of 11.28 mm at an ambient temperature of $23\pm2°C$, a needle having a tip curvature radius of 0.5 mm is pierced to the pressure-sensitive adhesive tape or sheet at a speed of 2 mm/s, and a maximum load (gf) until the needle penetrates the tape or sheet is measured as the puncture strength.

The pressure-sensitive adhesive tape or sheet according to the embodiment of the present invention preferably has electrical insulating properties and preferably employs a substrate having a volume resistivity of $1\times 10^{10}$ $\Omega\cdot$cm or more, preferably $1\times 10^{12}$ $\Omega\cdot$cm or more, particularly preferably $1\times 10^{14}$ $\Omega\cdot$cm or more, and most preferably $1\times 10^{16}$ $\Omega\cdot$cm or more, where the volume resistivity is measured according to JIS C2107:1999. Such substrate is exemplified by a substrate made from a plastic selected typically from a polyimide, a poly(phenylene sulfide), a polyester, and a polypropylene.

Pressure-sensitive Adhesive Tape or Sheet

The pressure-sensitive adhesive tape or sheet according to the embodiment of the present invention includes the substrate; and the pressure-sensitive adhesive layer present on or over a surface of the substrate, where the surface has a wetting tension of from 30 to 35 mN/m as determined by a method according to JIS K 6768:1999.

The pressure-sensitive adhesive tape or sheet according to the embodiment of the present invention may be formed by a known or customary method. Exemplary methods include a method of preparing a coating liquid containing the pressure-sensitive adhesive and other optional components and applying the coating liquid directly to the substrate surface having a wetting tension of from 30 to 35 mN/m to form a pressure-sensitive adhesive layer; or a method of applying the coating liquid to a suitable separator (e.g., a release paper) to form a pressure-sensitive adhesive layer thereon and transferring the pressure-sensitive adhesive layer to the substrate surface having a wetting tension of from 30 to 35 mN/m. When the pressure-sensitive adhesive layer is provided by transferring, some voids (air gaps) may remain at the interface with the substrate. In this case, the tape or sheet may be subjected to a heating-pressurizing treatment such as autoclave treatment to diffuse and remove the voids.

The pressure-sensitive adhesive tape or sheet according to the embodiment of the present invention, as having the configuration, offers excellent adhesion between the pressure-sensitive adhesive layer and the substrate and has an anchoring force of preferably 5 N/19 mm or more, more preferably from 5 to 20 N/19 mm, and particularly preferably from 6 to 18 N/19 mm, where the anchoring force is measured by a measurement method mentioned later. The pressure-sensitive adhesive tape or sheet, when wound into a roll, can be smoothly unwound without transfer of the pressure-sensitive adhesive to the substrate backside.

Anchoring Force Measurement Method

The anchoring force is measured by pressing and bonding a 19 mm-wide polyester pressure-sensitive adhesive tape (trade name "No. 315 #25", supplied by Nitto Denko Corporation) onto a surface of the pressure-sensitive adhesive layer of a sample 20-mm wide pressure-sensitive adhesive tape or sheet by one reciprocating movement of a 2-kg roller at 25°C to give a specimen; leaving the specimen stand at 25°C for 30 minutes or longer; peeling the polyester pressure-sensitive adhesive tape from the specimen at an angle of 180° and a speed of 300 mm/minute; measuring a peel stress during the peeling; and defining the peel stress as the anchoring force.

The pressure-sensitive adhesive tape or sheet according to the embodiment of the present invention has a water absorption of typically about 3 percent by weight or less, preferably 2 percent by weight or less, particularly preferably 1.5 percent by weight or less, and most preferably 1 percent by weight or less as measured by the measurement method, where the water absorption is measured after the tape or sheet is left stand at an ambient temperature of 23°C and relative humidity of 50% for 24 hours. The pressure-sensitive adhesive tape or sheet having a water absorption within the range can be obtained typically by employing a substrate having a water absorption of 3 percent by weight or less, preferably 2 percent by weight or less, particularly preferably 1.5 percent by weight or less, and most preferably 1 percent by weight or less, where the water absorption is measured after the substrate is left stand at an ambient temperature of 23°C and relative humidity of 50% for 24 hours. The pressure-sensitive adhesive tape or sheet having a water absorption within the range may less cause the decomposition of the solute component inside the battery and can help the battery to have better properties and a longer life.

The pressure-sensitive adhesive tape or sheet according to the embodiment of the present invention has a puncture strength of preferably 300 gf or more, more preferably 450 gf or more, particularly preferably 500 gf or more, and most preferably 600 gf or more, as measured by the measurement method. The pressure-sensitive adhesive tape or sheet having a puncture strength within the range may be obtained typically by employing a substrate having a puncture strength of 300 gf or more, preferably 450 gf or more, particularly preferably 500 gf or more, and most preferably 600 gf or more, as measured by the measurement method.

The pressure-sensitive adhesive tape or sheet according to the embodiment of the present invention preferably has electrical insulating properties and has a volume resistivity of preferably $1\times 10^{10}$ $\Omega\cdot$cm or more, more preferably $1\times 10^{12}$ $\Omega\cdot$cm or more, particularly preferably $1\times 10^{14}$ $\Omega\cdot$cm or more, and most preferably $1\times 10^{16}$ $\Omega\cdot$cm or more. The pressure-sensitive adhesive tape or sheet having a volume resistivity within the range may be obtained typically by employing a substrate having a volume resistivity of $1\times 10^{10}$ $\Omega\cdot$cm or more, preferably $1\times 10^{12}$ $\Omega\cdot$cm or more, particularly preferably $1\times 10^{14}$ $\Omega\cdot$cm or more, and most preferably $1x 10^{16}$ $\Omega\cdot$cm or more.

In a preferred embodiment of the present invention, the pressure-sensitive adhesive tape or sheet includes the pressure-sensitive adhesive layer present on or over the substrate with a margin of from about 300 to about 1800 times, and preferably from 500 to 1500 times, the thickness of the pressure-sensitive adhesive layer, where the margin is present both side edges of the substrate. Specifically, the pressure-sensitive adhesive layer is laminated (applied) on the substrate surface preferably while remaining a blank area of the pressure-sensitive adhesive layer (an area where no pressure-sensitive adhesive layer is present) having a width of from about 300 to 1800 times, and preferably from 500 to 1500 times, the thickness of the pressure-sensitive adhesive layer, where the blank area is present at both side edges of the substrate. This is preferred both for ensuring tackiness at certain level and for preventing edge-oozing of the adhesive.

The pressure-sensitive adhesive tape or sheet according to the embodiment of the present invention may have a width of typically from about 10.0 to about 150.0 mm and preferably from about 15.0 to about 110.0 mm, while the width is suitably adjustable.

The pressure-sensitive adhesive tape or sheet according to the embodiment of the present invention may be provided with a separator (release liner) on the pressure-sensitive adhesive layer surface typically for protecting the pressure-sensitive adhesive layer surface and for preventing blocking. The separator is removed upon application of the pressure-sensitive adhesive tape or sheet to an adherend and does not have to be provided necessarily. The separator to be used is not limited and may be any of known or customary release papers. Such separator is exemplified by base materials having a release layer typically of a plastic film or paper, where the release layer has a surface treated with a release agent such as a silicone, long-chain alkyl, fluorocarbon, or molybdenum sulfide release agent; base materials having low adhesiveness and made from any of fluorocarbon polymers such as polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers; and base materials having low adhesiveness and made from any of nonpolar polymers exemplified by olefinic resins such as polyethylenes and polypropylenes.

The pressure-sensitive adhesive tape or sheet according to the embodiment of the present invention, as having the configuration, can be distributed while being wound as a roll without the use of a separator (release liner). The roll of pressure-sensitive adhesive tape or sheet obtained by winding the pressure-sensitive adhesive tape or sheet can be transported and stored easily. The roll of pressure-sensitive adhesive tape or sheet, as using no separator (release liner), can reduce waste in amount. The roll can be smoothly unwound without transfer of the pressure-sensitive adhesive to the substrate backside and offers excellent workability.

The pressure-sensitive adhesive tape or sheet according to the embodiment of the present invention has a pressure-sensitive adhesive layer including a pressure-sensitive adhesive containing substantially no polar group and can thereby exhibit a high adhesive strength without causing the deterioration of an electrolytic solution of a non-aqueous battery even when the tape or sheet is applied to a portion to be immersed in the electrolytic solution or a portion having a possibility of coming into contact with the electrolytic solution.

The pressure-sensitive adhesive tape or sheet according to the embodiment of the present invention, when to be wound into a roll of pressure-sensitive adhesive tape or sheet, is preferably provided with a backing layer containing a release component on a substrate backside. The term "substrate backside" hereinafter refers to a surface of the substrate opposite to the "surface on which the pressure-sensitive adhesive layer is to be arranged". The presence of the backing layer helps the pressure-sensitive adhesive tape or sheet to be easily unwound from the roll of pressure-sensitive adhesive tape or sheet according to the embodiment of the present invention.

The release component to form the backing layer is exemplified by, but not limited to, long-chain alkyl acrylate copolymers, long-chain alkyl vinyl ether copolymers, and long-chain alkyl vinyl ester copolymers. The backing layer has a thickness of typically preferably from about 0.001 to about 1 $\mu$m, more preferably from 0.01 to 0.5 $\mu$m, and particularly preferably from 0.03 to 0.2 $\mu$m. The backing layer, when having a thickness within the range, may help the roll of pressure-sensitive adhesive tape or sheet to be unwound easily and prevent transfer of the release component forming the backing layer to the pressure-sensitive adhesive.

When the backing layer is to be arranged on the substrate backside, the substrate backside preferably has a wetting tension of greater than 35 mN/m so as to provide better adhesion between the backing agent (release component) and the substrate. The substrate backside may have a wetting tension of typically from greater than 35 mN/m to about 70 mN/m, more preferably from 36 to 65 mN/m, and particularly preferably from 37 to 60 mN/m, where the wetting tension is measured by a method according to JIS K 6768:1999. The wetting tension may be adapted (increased) typically by a process of subjecting the substrate backside to a chemical oxidation treatment such as corona discharge treatment, blasting, primer treatment, or plasma treatment.

The roll of pressure-sensitive adhesive tape or sheet may have an unwinding force of typically from 0.01 to 10 N/19 mm, preferably from 0.05 to 1 N/19 mm, and particularly preferably from 0.08 to 0.5 N/19 mm. The roll of pressure-sensitive adhesive tape or sheet, when having an unwinding force within the range, is protected from loosening and still can be easily unwound.

Non-aqueous Battery

The non-aqueous battery (non-aqueous electrolyte battery) according to an embodiment of the present invention is a battery obtained by affixing the pressure-sensitive adhesive tape or sheet to a battery element in a portion to be immersed in an electrolytic solution or in a portion having the possibility of coming into contact with the electrolytic solution. The tape or sheet is applied typically for the purpose of preventing foreign substance or burr from penetrating the separator; and/or for the purpose of improving the packability of electrodes into a battery case (e.g., for fixing the winding terminal of a spiral bundle of electrodes and/or for preventing the separation of an active material). The non-aqueous battery is exemplified by a lithium-ion battery. The portion to which the pressure-sensitive adhesive tape or sheet is affixed is not limited, as long as a portion where the tape or sheet can achieve any of the purposes.

The non-aqueous battery according to the embodiment of the present invention may be manufactured typically by laminating a cathode plate having a cathode active material, a separator, and an anode plate having an anode active material in this order to give a laminate; winding the laminate to give a spiral bundle of electrodes; welding a cathode lead and an anode lead to predetermined portions of the cathode and the anode, respectively; and encapsulating the resulting article together with an electrolytic solution into a battery case.

The electrolytic solution is exemplified by an electrolytic solution of a lithium salt dissolved in a solvent mixture of a cyclic carbonate and a chain carbonate. The lithium salt is exemplified by $LiPF_6$; the cyclic carbonate is exemplified by propylene carbonate (PC) and ethylene carbonate (EC); and the chain carbonate is exemplified by dimethyl carbonate (DMC), ethylmethyl carbonate (EMC), and diethyl carbonate (DEC).

The non-aqueous battery according to the embodiment of the present invention employs the pressure-sensitive adhesive tape or sheet, thereby resists the electrolytic solution deterioration, and can maintain its output at a high level.

Examples

The present invention will be illustrated in further detail with reference to several examples below. It should be noted, however, that the examples are by no means intended to limit the scope of the invention. Weight-average molecular weights of pressure-sensitive adhesives were values as measured by the procedure as in (5) measurement method of pressure-sensitive adhesive molecular weight distribution mentioned later.

Example 1

A coating liquid (1) was prepared by mixing 80 parts by weight of a first polyisobutylene rubber with 20 parts by weight of a second polyisobutylene rubber to give a mixture; and diluting the mixture with toluene. The first polyisobutylene rubber (trade name "Oppanol B 80", supplied by BASF Japan Ltd.) had a weight-average molecular weight of $92 \times 10^4$ and a degree of unsaturation of 0.2. The second polyisobutylene rubber (trade name "Oppanol B 12 SFN", supplied by BASF Japan Ltd.) had a weight-average molecular weight of $7 \times 10^4$ and a degree of unsaturation of less than 0.1.

A coating liquid (2) was prepared by diluting a long-chain alkyl releasing agent (trade name "HSW-H1", supplied by Hodogaya Chemical Co., Ltd.) with toluene.

A 30-$\mu$m thick polypropylene film having a puncture strength of 640 gf was prepared as a substrate. The substrate had a wetting tension of 31 mN/m in one surface thereof. The coating liquid (1) was applied to the substrate surface having a wetting tension of 31 mN/m so as to give a pressure-sensitive adhesive layer having a thickness of 10 $\mu$m after drying. The coating liquid (2) was applied to the other surface (having a wetting tension of 37 mN/m) of the substrate opposite to the pressure-sensitive adhesive layer so as to give a layer having a thickness of 0.1 $\mu$m after drying and thus yielded a pressure-sensitive adhesive tape (1) having a water absorption of 0.08%.

Example 2

A pressure-sensitive adhesive tape (2) having a water absorption of 0.08% was prepared by the procedure of Example 1, except for not applying the coating liquid (2) to the other surface of the substrate opposite to the pressure-sensitive adhesive layer.

Example 3

A coating liquid (3) was prepared by mixing 80 parts by weight of an isobutylene-isoprene rubber and 20 parts by weight of a polyisobutylene rubber to give a mixture; and diluting the mixture with toluene. The isobutylene-isoprene rubber (trade name "JSR BUTYL268", supplied by JSR Corporation) had a weight-average molecular weight of $48 \times 10^4$ and a degree of unsaturation of 0.1. The polyisobutylene rubber (trade name "Oppanol B 12 SFN", supplied by BASF Japan Ltd.) had a weight-average molecular weight of $7 \times 10^4$ and a degree of unsaturation of less than 0.1.

A pressure-sensitive adhesive tape (3) having a water absorption of 0.1% was prepared by the procedure of Example 1, except for using the coating liquid (3) instead of the coating liquid (1).

Comparative Example 1

A pressure-sensitive adhesive tape (4) having a water absorption of 0.08% was prepared by the procedure of Example 1, except for preparing a 30-$\mu$m thick polypropylene film having wetting tensions of 37 mN/m in both surfaces thereof; and applying the coating liquid (1) to one surface of the substrate.

The pressure-sensitive adhesive tapes prepared in the examples and comparative example were evaluated by methods as follows.

(1) Substrate Wetting Tension Measurement Method

The wetting tension of a substrate surface was measured according to JIS K 6768:1999.

(2) Anchoring Force Measurement Method

A 19 mm-wide polyester pressure-sensitive adhesive tape (trade name "No. 315 #25", supplied by Nitto Denko Corporation) was pressed and bonded to the pressure-sensitive adhesive layer surface of a sample pressure-sensitive adhesive tape or sheet (width: 20 mm) by one reciprocating movement of a 2-kg roller at 25°C; the resulting article was left stand at 25°C for 30 minutes or longer; the polyester pressure-sensitive adhesive tape was peeled off from the sample tape or sheet at an angle of 180° and a speed of 300 mm/minute; and a peel stress during the peeling was measured and defined as the anchoring force.

(3) Unwinding Force Measurement Method

A sample pressure-sensitive adhesive tape having a width of 19 mm and a length of 30 m was wound into a roll and yielded a pressure-sensitive adhesive tape roll.

The high-speed unwinding force of the resulting pressure-sensitive adhesive tape roll was measured according to JIS Z0237.

Measurement Conditions: JIS Z 0237:2009

Unwinding Speed: 30 m/min

(4) Unwindability Evaluation Method

A sample pressure-sensitive adhesive tape having a width of 19 mm and a length of 30 m was wound into a roll and yielded a pressure-sensitive adhesive tape roll.

The resulting pressure-sensitive adhesive tape roll was unwound by about 10 m at an ambient temperature of 23°C and relative humidity of 50% at speeds of 20 m/min and 60 m/min, respectively. Whether the pressure-sensitive adhesive transferred to the backside of the rolled layer was visually observed, and unwindability was evaluated according to criteria as follows:

Criteria:

Excellent: No deposition (transfer) of the pressure-sensitive adhesive on the substrate backside was observed both at speeds of 20 m/min and 60 m/min;

Good: No deposition of the pressure-sensitive adhesive on the substrate backside was observed at a speed of 20 m/min; and

Failure: Deposition of the pressure-sensitive adhesive on the substrate backside was observed both at speeds of 20 m/min and 60 m/min.

(5) Pressure-Sensitive Adhesive Molecular Weight Distribution Measurement Method

The pressure-sensitive adhesive of a sample pressure-sensitive adhesive tape was sampled by picking, dissolved in tetrahydrofuran (THF) to give a solution, and left stand overnight.

The solution was filtrated through a 0.45-$\mu$m membrane filter, the filtrate was subjected to gel permeation chromatography (GPC measurement) (HLC-8120GPC, supplied by TOSOH CORPORATION), based on which a GPC differential molecular weight distribution curve in terms of a polystyrene standard was plotted, and the area ratio of each molecular weight range was calculated as a weight fraction (percent by weight).

Measurement Conditions

Column: TSKgel
Column size: 6.0 mm in inner diameter by 150 mm in length
Eluent: THF
Flow rate: 0.6 mL/min
Detector: refractive index detector (RI)
Column temperature: 40°C
Injection volume: 20 $\mu$L

The results of the evaluations are catalogued into a table as follows.

[Table 1]

TABLE 1

| | | | Example 1 | Example 2 | Example 3 | Comparative Example 1 |
|---|---|---|---|---|---|---|
| Pressure-sensitive adhesive layer | Pressure-sensitive adhesive | Polyisobutylene rubber (Mw: 92x $10^4$) | 80 | 80 | - | 80 |
| | | Polyisobutylene rubber (Mw: 7x $10^4$) | 20 | 20 | 20 | 20 |
| | | Isobutylene-isoprene rubber (Mw: 48x $10^4$) | - | - | 80 | - |
| | Thickness ($\mu$m) | | 10 | 10 | 10 | 10 |
| | Storage shear modulus G' (Pa) at 23°C | | 2.85x $10^5$ | 2.85x $10^5$ | - | 2.85x $10^5$ |
| | Gel fraction (%) | | 95 | 95 | 93 | 95 |

(continued)

| | | Example 1 | Example 2 | Example 3 | Comparative Example 1 |
|---|---|---|---|---|---|
| Substrate | Wetting tension (mN/m) of surface to face pressure-sensitive adhesive layer | 31 | 31 | 31 | 37 |
| | Wetting tension (mN/m) of substrate backside | 37 | 37 | 37 | 37 |
| | Backing agent | presence | absence | presence | presence |
| Evaluation | Anchoring force (N/19 mm) | 7.4 | 7.4 | 9.0 | 4.8 |
| | Unwinding force (N/19 mm) | 0.2 | 0.2 | 0.2 | 0.2 |
| | Unwindability | Excellent | Good | Excellent | Failure |
| | Weight fraction (percent by weight) of pressure-sensitive adhesive fraction in molecular weight range of from $30 \times 10^4$ to $500 \times 10^4$ | 58 | 58 | - | 58 |
| | Weight fraction (percent by weight) of pressure-sensitive adhesive fraction in molecular weight range of from $1 \times 10^4$ to less than $30 \times 10^4$ | 42 | 42 | - | 42 |

Reference Signs List

1    substrate
1a   substrate surface to face pressure-sensitive adhesive layer
1b   substrate backside
2    pressure-sensitive adhesive layer
3    pressure-sensitive adhesive tape or sheet
4    electrode terminal
5    cathode plate
6    anode plate
7    separator
8    active material
9    spiral bundle of electrodes

**Claims**

**1.** A pressure-sensitive adhesive tape or sheet comprising:

a substrate; and
a pressure-sensitive adhesive layer present on or over one surface of the substrate,
wherein:

the surface of the substrate to face the pressure-sensitive adhesive layer has a wetting tension of from 30 to 35 mN/m, where the wetting tension is measured by a method according to Japanese Industrial Standard (JIS) K 6768:1999; and

the pressure-sensitive adhesive layer comprises a pressure-sensitive adhesive containing substantially no polar group.

2. The pressure-sensitive adhesive tape or sheet according to claim 1,
wherein the pressure-sensitive adhesive layer comprises a rubber pressure-sensitive adhesive as the pressure-sensitive adhesive.

3. The pressure-sensitive adhesive tape or sheet according to claim 2,
wherein the pressure-sensitive adhesive layer comprises at least one rubber pressure-sensitive adhesive selected from the group consisting of a polyisobutylene rubber and an isobutylene-isoprene rubber as the pressure-sensitive adhesive.

4. The pressure-sensitive adhesive tape or sheet according to any one of claims 1 to 3,
wherein the pressure-sensitive adhesive tape or sheet has an anchoring force of 5 N/19 mm or more, where the anchoring force is measured by a measurement method as follows:

anchoring force measurement method: the anchoring force is measured by:

pressing and bonding a 19 mm-wide polyester pressure-sensitive adhesive tape (trade name "No. 315 #25", supplied by Nitto Denko Corporation) onto a surface of the pressure-sensitive adhesive layer of a sample 20-mm wide pressure-sensitive adhesive tape or sheet by one reciprocating movement of a 2-kg roller at 25°C to give a specimen;
leaving the specimen stand at 25°C for 30 minutes or longer;
peeling the polyester pressure-sensitive adhesive tape from the specimen at an angle of 180° and a speed of 300 mm/minute;
measuring a peel stress during the peeling; and
defining the peel stress as the anchoring force.

5. The pressure-sensitive adhesive tape or sheet according to any one of claims 1 to 4, for use in manufacturing of a non-aqueous battery.

6. A roll of pressure-sensitive adhesive tape or sheet, obtained by winding the pressure-sensitive adhesive tape or sheet of any one of claims 1 to 5 into a roll.

7. A non-aqueous battery comprising:

a battery element; and
the pressure-sensitive adhesive tape or sheet of any one of claims 1 to 5 adhering to the battery element.

[Fig. 1]

[Fig. 2]

(2-1)

(2-2)

(2-3)

Europäisches
Patentamt

European
Patent Office

Office européen
des brevets

## EUROPEAN SEARCH REPORT

**Application Number**

EP 14 17 9283

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 423 287 A1 (NITTO DENKO CORP [JP]) 29 February 2012 (2012-02-29) * abstract * * paragraph [0006] - paragraphs [0008], [0010] * * paragraph [0035]; claim 1; example 2 * ----- | 1-7 | INV. C09J7/02 H01M2/08 |
| A | WO 97/00922 A1 (MINNESOTA MINING & MFG [US]) 9 January 1997 (1997-01-09) * page 6, line 12 - line 15 * ----- | 1 | |
| A | US 2004/053023 A1 (GALLE ANDRE [DE] ET AL) 18 March 2004 (2004-03-18) * paragraph [0103] * ----- | 1 | |

| TECHNICAL FIELDS SEARCHED (IPC) |
|---|
| C09J H01M |

The present search report has been drawn up for all claims

| Place of search | Date of completion of the search | Examiner |
|---|---|---|
| Munich | 8 December 2014 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 17 9283

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2014

| Patent document cited in search report | | Publication date | Patent family member(s) | | Publication date |
|---|---|---|---|---|---|
| EP 2423287 | A1 | 29-02-2012 | CN | 102382588 A | 21-03-2012 |
| | | | EP | 2423287 A1 | 29-02-2012 |
| | | | JP | 2012067291 A | 05-04-2012 |
| | | | KR | 20120042640 A | 03-05-2012 |
| | | | US | 2012058335 A1 | 08-03-2012 |
| WO 9700922 | A1 | 09-01-1997 | AU | 5638996 A | 22-01-1997 |
| | | | BR | 9608623 A | 15-06-1999 |
| | | | CA | 2224375 A1 | 09-01-1997 |
| | | | EP | 0833873 A1 | 08-04-1998 |
| | | | JP | H11508296 A | 21-07-1999 |
| | | | US | 5602202 A | 11-02-1997 |
| | | | WO | 9700922 A1 | 09-01-1997 |
| US 2004053023 | A1 | 18-03-2004 | DE | 10036705 A1 | 28-03-2002 |
| | | | EP | 1311645 A1 | 21-05-2003 |
| | | | ES | 2256286 T3 | 16-07-2006 |
| | | | JP | 2004505163 A | 19-02-2004 |
| | | | US | 2004053023 A1 | 18-03-2004 |
| | | | WO | 0210304 A1 | 07-02-2002 |

EPO FORM P0459

For more details about this annex : see Official Journal of the European Patent Office, No. 12/82

**EP 2 832 810 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005298094 A
- JP H11102722 A